# EUROPEAN PATENT APPLICATION

(11) **EP 2 450 097 A1**
(43) Date of publication of application: **09.05.2012**
(21) Application number: 12153646.0
(22) Date of filing: 08.06.2009
(51) Int. Cl.: B01F 3/12, B01F 11/02, B01F 13/02, B01F 15/06, C12G 1/02

(54) **Group and method for the treatment of a substance with a liquid behaviour, in particular wine, stored in a tank**

(30) Priority: 11.06.2008 IT MI20081063
(62) Divisional of application: 09162145.8
(71) Applicant: Pohling, Ralf, 09013 Carbonia (Cagliari) (IT)
(72) Inventor: Pohling, Ralf, 09013 Carbonia (Cagliari) (IT)
(74) Representative: Branca, Emanuela

(57) **Abstract**

A treatment group (10) of a substance having a liquid behaviour which can be applied to an accumulation tank (11) of said substance having a liquid behaviour (12) comprising means for the recirculation and mixing of said substance with a liquid behaviour (12) acting inside the tank towards an upper area of the same, wherein said recirculation and mixing means comprise means for introducing a gas into said tank.

## Description

The present invention relates to a group for the treatment of a substance with a liquid behaviour.

In particular, said substance with a liquid behaviour can be wine, for example white wine, stored in containers having various forms and capacities and left in contact with relative yeasts, which serve for refining the wine.

Under this condition, as the above yeasts have a specific weight which is greater than wine, they become deposited, by gravity, on the bottom of the tank and consequently unfortunately only act with the portion of wine close to the bottom of the tank.

Furthermore, in this case, part of the above yeasts can be subject to "rotting" phenomena thus releasing undesired substances capable of negatively altering the taste of the wine stored in the tank.

In view of this problem, the present invention preferably relates to a group capable of mixing and recirculating the above yeasts deposited on the bottom area in order to obtain a homogeneous refinement of the whole quantity of wine stored in the tank.

There are currently many different devices which exert the above mixing function, which, however, have various disadvantages.

A very widely-spread embodiment envisages the presence of rotating elements, such as shaped blade stirrers, either fixed or manually inserted in the containers, which move in rotation inside the tank and during their rotation act directly on the substance to be mixed.

Although this embodiment is very widely used, it has considerable disadvantages such as, for example, a complicated design of the tank which must house these rotating elements in its interior, and also a large energy consumption is required due to the high resistance that the substance to be mixed, of the viscous fluid type, normally opposes with respect to the rotation of the above shaped blades or rods.

These systems are also difficult to assemble due to the frequent presence inside the tanks of elements such as probes, tubes, plates for heat conditioning, wire level indicators, etc. which could be in conflict with the movement of the mechanical stirrers.

Alternatively, other mixing devices of a liquid substance contained in a relative tank are currently known, which generally comprise a closed mixing and recirculation circuit of the same substance.

These currently known groups generally remove a part of the product from the bottom area of the tank and subsequently introduce it into a head area to cyclically move the contents of the tank.

In other cases there is the presence of pumps and nozzles suitable for directing part of the liquid substance under pressure towards the bottom or walls of the relative containers.

Unfortunately these last two embodiments described also have various drawbacks such as considerable consumption of energy to be supplied to the pump for pressurizing the substance to be mixed, and also the fact that the quality of the substance to be moved is often damaged and/or jeopardized due to the strong pressure generated by the pumps which act directly on the product.

An objective of the present invention is to provide a group and method capable of solving the above-mentioned drawbacks of the known art in an extremely simple, economical and particularly functional way.

Another objective is to provide a group and method for the mixing of a substance with a liquid behaviour stored in a container capable of mixing this substance without altering its properties requiring a low energy consumption.

A further objective is to have a group and method for the mixing of a substance with a liquid behaviour stored in a container which can be easily installed in common known tanks.

Another objective is to have a group and method for the mixing of a substance with a liquid behaviour stored in a container capable of facilitating a thermal homogeneity in the various areas of the tank.

A further objective is to have a group and method for the mixing of a substance with a liquid behaviour stored in a container capable of controlling, and possibly reducing, the concentration of some of the volatile substances contained in the liquid stored.

An addition objective is to have a group and method for the mixing of a substance with a liquid behaviour stored in a container capable of accelerating the cellular disgregation of the membrane of some of the substances contained in the liquid stored.

Yet another objective is to provide a group and method for the mixing and recirculation of wine-refining yeasts which are deposited on the bottom of a tank which does not harm the wine to be treated and which can be easily installed in common tanks currently in use.

These objectives according to the present invention are achieved by providing a group and method for the mixing of a substance with a liquid behaviour as respectively specified in claims 1 and 9.

Further characteristics of the invention are indicated in the dependent claims.

The characteristics and advantages of a group and method for the mixing of a substance with a liquid behaviour according to the present invention will appear more evident from the following illustrative and non-limiting description, referring to the enclosed schematic drawings, in which:

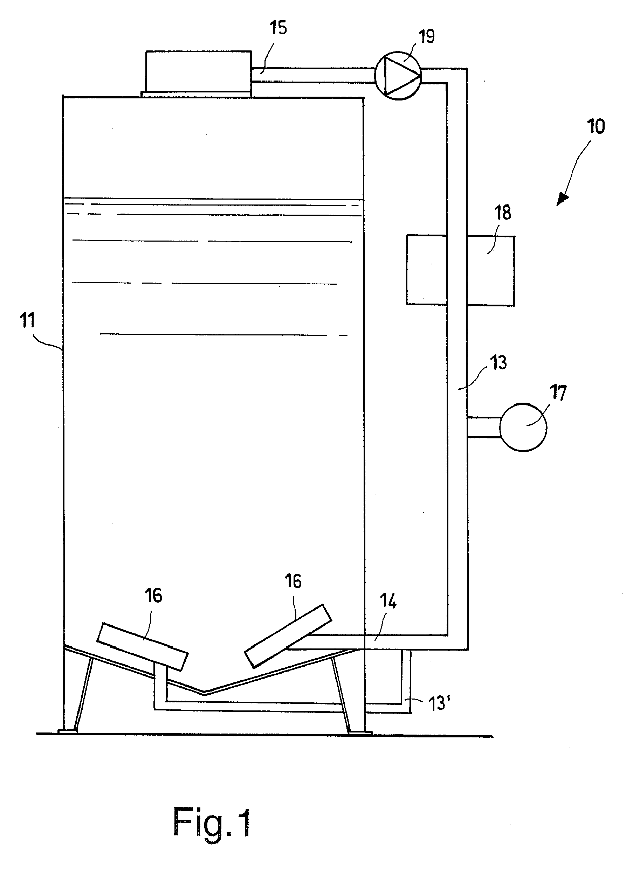

figure 1 is an elevation partial sectional schematic view of treatment group of a substance with a liquid behaviour according to the present invention.

With reference to the figure, this shows, with 10, a group for the treatment and/or mixing of a substance with a liquid behaviour, in particular wine with relative yeasts but also other food-type or different substances, which can be applied to an accumulation tank 11.

According to the invention, said group 10 comprises recirculation and mixing means of the substance, and possible relative yeasts or other components, which act inside the tank 11, preferably in the lower half or directly from the bottom, towards an upper area, wherein said recirculation and mixing means comprise means for the introduction of a gas, preferably an inert gas, such as nitrogen, into the tank 11.

In particular, as can be seen in figure 1, the recirculation and mixing means of the substance with a liquid behaviour 12 comprise a circulation duct 13 of the gas, said duct 13 has a first end 14 for the entry into the tank 11 of the gas associated with the bottom portion of the tank 11, and a second end 15 fed with the same gas.

According to the invention, there is also the presence of a pump 19 associated with the duct 13 between the first and second end in addition to inlet means 16 of the gas into the tank 11 associated with the first end 14 of the duct 13.

It is also envisaged that a single pump 19 can be connected to a plurality of tanks 11.

In a preferred embodiment, the second end 15 of the duct 13, that fed with gas, can be associated with the head portion of the tank 11 as shown in the figure and in this case the same gas previously introduced into the tank 11 and which has risen inside the tank 11, is recirculated.

Alternatively, the second end 15 of the duct 13 can be fed with gas taken upstream from a specific external tank.

In other cases, the gas previously introduced into the tank can be expelled outside, re-introduced into the tank, or sent to other devices, for example suitable for withholding at least part of some of the volatile substances contained in the liquid stored previously removed by stripping.

As shown in the figure, the inlet means 16 of the gas into the bottom portion of the tank 11 can comprise porous septa possibly connected by means of secondary ducts 13' to the first end 14 of the duct 13.

Alternatively, the inlet means 16 of the gas into the tank 11 can comprise aerators also possibly connected by means of secondary ducts 13' to the first end 14 of the duct 13.

According to another embodiment, the treatment group 10 according to the present invention can also comprise heat conditioning means 18, such as heat exchangers, associated with the temperature conditioning duct 13 of the gas circulating therein 13.

In this case, the gas advantageously not only moves the liquid in the tank 11 and possibly circulates the yeasts deposited on the bottom, but also maintains the interior of the tank 11 at a certain temperature.

The treatment group 10 can also comprise an "introduction" valve 17 of another substance associated with the duct 13 in which the gas circulates.

In this case, the gas advantageously not only moves the liquid in the tank 11 and possibly circulates the yeasts deposited on the bottom, but also introduces a certain substance into the tank 11 in order to modify the properties as required, for example the taste in the case of wine, of the liquid to be treated.

According to two different embodiments, the duct 13 can substantially develop inside the tank 11, and in this case it is preferably made of a flexible material, but alternatively it can substantially develop outside the tank 11 and in this case is preferably made of a rigid material.

In order to make the circulation of the gas in the tank 11 automatic, the treatment group 10 can comprise a control and drive central processing unit of the pump 19 and, according to this embodiment, said pump 19 can be automatically activated in continuous or according to pre-established mixing cycles depending on the substance to be treated.

Finally, according to an embodiment which is not shown, the treatment group 10 can also comprise means for generating ultrasounds acting inside the tank 11 to accelerate the cell disgregation of the membrane of some of the substances contained in the liquid stored.

If the substance stored is wine containing yeasts, the ultrasounds produced, together with the recirculation of the wine generated by the gas introduced into the tank 11, advantageously optimize the autolysis of the yeast particles reducing the necessary refinement time.

These ultrasound generators can be positioned inside, for example on the bottom, or outside the tank 11, for example on the side walls, and can possibly collaborate with specific reflection barriers situated inside the tank 11 to concentrate the ultrasounds produced in a single area.

In this latter case, the gas introduced into the tank 11 can cyclically send the liquid substance in correspondence with this reflection area of the ultrasounds.

According to what is described above, the invention therefore develops a method for the treatment of a substance with a liquid behaviour stored in a tank 11, such as wine comprising yeasts, equipped with recirculation and mixing means, wherein the re-mixing of the substance itself takes place by introducing a gas into the tank 11.

The flow-rate and pressure of the gas introduced, the porosity and dimension of the introduction systems, the quantity and positioning of these introduction systems, and also the possibility of contemporaneously activating various introduction systems in continuous and/or discontinuous and also establishing the possible feeding sequence, naturally make the system, object of the present invention, extremely flexible and adjustable on the basis of the requirements and results to be obtained.

Furthermore, the above method can also comprise the phase of generating ultrasounds in the tank 11 and/or the phase of extracting by stripping from the liquid stored into the tank 11 some of the volatile substances through the gas previously introduced into the tank.

In this latter case, it is therefore possible to control the concentration of some of the volatile substances contained in the liquid stored.

Alternatively, the gas can be completely re-introduced into the tank 11 thus avoiding stripping phenomena if undesired.

The functioning of the group, object of the invention, can be easily understood.

The invention is based on the fact that a gas introduced into the tank 11, preferably in the bottom area but also in other areas, tends to naturally rise towards the upper area of the same tank creating a circulatory current and entraining the substance stored with it together with possible particles of yeast deposited on the bottom if the substance is wine.

In this way, the particles of yeast fall down before rising again, moving the wine contained in the tank and homogeneously treating the whole contents of the tank.

As described, the gas introduced into the tank can also be thermally conditioned so as to control the temperature in the container and other substances can also be added to it, if necessary, for respectively controlling the temperature and quality of the substance to be treated.

It can thus be seen that the group and method for mixing a substance with a liquid behaviour according to the present invention achieves the objectives previously specified.

The group and method for mixing a substance with a liquid behaviour according to the present invention does in fact mix a substance with a liquid behaviour contained in a tank requiring a low energy consumption.

Furthermore, said treatment group is easy to install in common known tanks, not requiring substantial modifications or costly interventions inside the relative tank.

Finally, the group of the present invention advantageously allows a common homogeneous temperature to be maintained with respect to the liquid stored, it enables the concentration of some of the volatile substances contained in the liquid stored to be controlled and/or reduced and also accelerates the cell disgregation of the membrane of other substances contained in the same liquid stored.

The mixing group of a substance with a liquid behaviour of the present invention thus conceived can undergo numerous modifications and variants, all included in the same inventive concept; furthermore all the details can be substituted by technically equivalent elements. In practice, the materials used, as also their dimensions, can vary according to the technical requirements.

## Claims

1. A treatment group (10) for the treatment of a substance having a liquid behaviour which can be applied to an accumulation tank (11), said group (10) comprising means for the recirculation and mixing of said substance with a liquid behaviour (12) acting inside said tank (11) towards an upper area of the same, said substance with a liquid behaviour (12) is wine with relative yeasts and said recirculation and mixing means comprise means for introducing a inert gas into a bottom portion of said tank (11), **characterized in that** said group (10) comprises means for generating ultrasounds acting inside said tank (11) for the cell disgregation of the membrane of some of the yeasts contained in said tank (11) during the movement from the bottom towards the upper area of the tank (11).

2. The treatment group (10) according to claim 1, **characterized in that** it comprises reflection barriers of said ultrasounds positioned inside said tank (11).

3. The treatment group (10) according to claim 1, **characterized in that** said recirculation and mixing means of said substance with a liquid behaviour (12) from a bottom area towards an upper area of said tank (11) comprise a recirculation duct (13) of said gas having a first end (14) for the entry of said gas into said tank (11) and a second end (15) fed with said gas, there also being a pump (19) associated with said duct (13) between said first and second end and inlet means (16) of said gas into said tank (11) associated with said first end (14) of said duct (13).

4. The treatment group (10) according to claim 3, **characterized in that** said second end (15) of said duct (13) fed with said gas is for the recirculation of said gas introduced and which has risen inside said tank (11) and is associated with said upper portion.

5. The treatment group (10) according to claim 3, **characterized in that** said second end (15) of said duct (13) fed with said gas is associated with an external tank of said gas.

6. The treatment group (10) according to claim 3, **characterized in that** said inlet means (16) of said gas into said tank (11) comprise porous septa connected by means of secondary ducts (13') to said second end (15) of said duct (13).

7. The treatment group (10) according to claim 1, **characterized in that** said inlet means (16) of said gas are arranged in correspondence with a bottom portion of said tank (11).

8. The treatment group (10) according to claim 3, **characterized in that** it comprises a valve (17) for the introduction into said duct (13) of another substance in addition to said circulating gas.

9. A method for the treatment of a substance having a liquid behaviour stored in an accumulation tank (11) comprising means for the recirculation and mixing of said substance with a liquid behaviour (12) from a bottom area towards an upper area of said tank (11), said substance with a liquid behaviour (12) being wine with relative yeasts, said method comprises the phases of:
- introducing an inert gas into a bottom portion of said tank (11) for mixing and recirculating said yeasts deposited by gravity on said bottom area of said tank without harming said wine stored; and
- generating ultrasounds in said tank (11) for the cell disgregation of the membrane of some of the yeasts contained in said tank (11) during the movement from the bottom towards the upper area of the tank (11).

10. The treatment method according to claim 9, **characterized in that** it also comprises the phase of extracting by stripping from said tank (11) some of volatile substances through said gas previously introduced into said liquid stored.
